# EUROPÄISCHE PATENTSCHRIFT

(11) **EP 4 158 516 B1**
(45) Veröffentlichungstag und Bekanntmachung des Hinweises auf die Patenterteilung: **10.07.2024**
(21) Anmeldenummer: 21729804.1
(22) Anmeldetag: 26.05.2021
(51) Int. Cl.: G06F 21/60, G06F 21/72, H04L 9/08, H04W 12/42, H04W 12/40, H04W 12/04, H04W 12/00, H04L 9/32, H04W 8/20

(54) **PERSONALISIERUNG EINES SECURE ELEMENT**
PERSONALIZATION OF A SECURE ELEMENT
PERSONNALISATION D'UN ÉLÉMENT SÉCURISÉ

(30) Priorität: 29.05.2020 DE 102020003275
(43) Veröffentlichungstag der Anmeldung: 05.04.2023
(60) Teilanmeldung: 23020555.1
(73) Patentinhaber: Giesecke+Devrient Mobile Security Germany GmbH, 81677 München (DE)
(72) Erfinder: ECKARDT, Stefan, 82291 Mammendorf (DE); RÖSNER, Martin, 83527 Haag in Oberbayern (DE); LIM, BeeGek, 85540 Haar (DE)
(74) Vertreter: Giesecke+Devrient IP
(86) Internationale Anmeldenummer: PCT/EP2021/025193
(87) Internationale Veröffentlichungsnummer: WO 2021/239272

(56) Entgegenhaltungen:
- EP-A1- 2 711 858
- EP-B1- 2 711 858
- US-A1- 2018 097 639

## Beschreibung

### Gebiet der Erfindung

Die Erfindung betrifft ein Verfahren zur Personalisierung eines Secure Element, das in ein mobiles Endgerät festeingebaut wird.

### Stand der Technik

Die Welt ist mobil vernetzt, und die mobile Vernetzung schreitet weiter. Mobilfunkfähige Endgeräte, oder kurz mobile Endgeräte, kommunizieren über Mobilfunknetze. Zu den klassischen mobilen (mobilfunkfähigen) Endgeräten zählen die Smartphones und Mobiltelefone. Zu mobilen (mobilfunkfähigen) Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Zur Nutzung eines mobilen (mobilfunkfähigen) Endgeräten, wie Smartphones oder Mobiltelefons, in einem Mobilfunknetzwerk eines Netzbetreibers enthält das Endgerät ein Secure Element oder Teilnehmeridentitätsmodul (subscriber identity module) mit einem Subskriptions Profil oder kurz Profil. Das Profil bewerkstelligt die Konfiguration des Endgeräts und der Verbindung des Endgeräts im Mobilfunknetz.

Zu einem Zeitpunkt nahe dem Beginn des Lebenszyklus des Secure Element wird das Secure Element personalisiert, wobei ein Betriebssystem und Personalisierungsdaten so einprogrammiert werden, dass das Betriebssystem mit den Personalisierungsdaten im Secure Element zur Ausführung gebracht werden kann. Nach der Personalisierung, insbesondere dem Einbringen des Betriebssystems, können Profile in das Secure Element geladen werden.

Das Endgerät selbst hat ein Chipset umfassend einen oder mehrere Endgerät-Chips zum Betrieb von Funktionen des Endgeräts. Aktuelle Smartphones haben beispielsweise typischerweise ein Chipset mit zumindest drei Endgeräte-Chips, nämlich einen Transceiver-IC, der die physische Funkkommunikation durchführt, einen Baseband-Prozessor (oder gleichbedeutend Modem), der Funktionen zur Datenübertragung über Funkkommunikation auf Protokollebene durchführt, und einen Application-Prozessor AP, auf welchem das Betriebssystem und Anwendungssoftware ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth. Die Kommunikation innerhalb des Chipset, zwischen den Chips des Chipset, erfolgt beispielsweise über ein Bussystem.

Secure Elements können in unterschiedlichen Formfaktoren gestaltet sein, insbesondere Plug-In, Embedded, Integrated und Software. Secure Elements vom Formfaktor Plug-In sind einfach in das Endgerät einfügbar und wieder daraus entnehmbar. Beispiele für Plug-In Secure Elements sind SIM-Karte (SIM = Subscriber Identity Module) oder USIM-Karte (Universal SIM) oder UICC (Universal Integrated Circuit Card) und kontaktieren das Endgerät über einen Kartenleser. Neben den Plug-In Secure Elements gibt es embedded Secure Elements, die auf einem dezidierten, eigenen gehäusten Chip oder SoC (System-on-Chip) angeordnet sind und fest in ein Endgerät eingebaut (z.B. eingelötet) werden, aber ansonsten ähnlich wie ein Plug-In Secure Element aufgebaut sind. Standardmäßig hat ein eUICC/eSE einen eigenen internen nichtflüchtigen NVM-Speicher, in welchem Betriebssystem, Personalisierungsdaten Subskriptions-Profile und Applikationen gespeichert sind.

Plug-In Secure Elements wie z.B. SIM-Karten (UICCs) und embedded Secure Elements (eUICCs) können auf einfache Weise beim Hersteller des Secure Element personalisiert werden fertig personalisiert an einen Kunden verkauft werden.

Ein weiterer Formfaktor eines Secure Element ist das im Markt noch nicht verbreitete integrierte Secure Element, das auf einem Endgeräte-Chip oder SoC (System-on-Chip) des Chipset des Endgeräts ganz oder teilweise mit integriert ist, also nicht auf einem eigenen Chip, abgetrennten Chip vorgesehen ist. Integrierte Teilnehmeridentitätsmodule werden mit dem Zusatz "integrated" versehen und z.B. als integrated UICC, oder kurz iUICC oder iSE, bezeichnet. Das integrierte Secure Element hat innerhalb eines dem Secure Element zugewiesenen Bereichs auf dem Chipset einen internen sicheren Prozessor und einen internen Arbeitsspeicher, allerdings kaum internen nichtflüchtigen NVM-Speicher, der zur gesicherten dauerhaften Speicherung von Betriebssystem, Personalisierungsdaten und Profilen verwendet werden könnte. Daher wird für integrierte Secure Elements der Ansatz verfolgt, Secure-Element-Daten wie Betriebssystem, Personalisierungsdaten und Profile in einem außerhalb des Secure Element, aber noch im Chipset des mobilen Endgeräts, vorgesehenen externen nichtflüchtigen NVM-Speicher in verschlüsselter Form abzuspeichern. Nur das Secure Element kann die im externen NVM-Speicher verschlüsselt abgespeicherten Secure-Element-Daten, wie Betriebssystem und Profile, entschlüsseln und exklusiv innerhalb des Secure Element (durch den Secure Processor im internen Arbeitsspeicher des Secure Element) zur Ausführung bringen. Das Endgerät hingegen kann die Secure-Element-Daten, wie Betriebssystem und Profile, nicht entschlüsseln und nicht zur Ausführung bringen.

Die Nutzung externer nichtflüchtiger NVM-Speicher des Endgeräts wird auch für embedded Secure Elements, kurz auch als eUICC oder eSE bezeichnet, diskutiert. Bei den hierbei diskutierten Konzepten werden eUICC-Daten wie Betriebssysteme, Profile oder Applikationen, die für das eUICC bestimmt sind, in einem nichtflüchtigen NVM-Speicher des Endgeräts gespeichert, der außerhalb des eUICC liegt.

Zur Personalisierung eines Secure Element, das einen externen NVM-Speicher des mobilen Endgeräts verwendet, durch Abspeichern des Betriebssystems und von Personalisierungsdaten in den externen NVM-Speicher des mobilen Endgeräts, muss das Secure Element bereits mit dem externen nichtflüchtigen NVM-Speicher kombiniert sein, da andernfalls der externe nichtflüchtige NVM-Speicher dem Secure Element noch nicht zur Verfügung steht. Dies wird beispielsweise dadurch erreicht, dass sowohl der externe nichtflüchtige NVM-Speicher als auch das Secure Element in das mobile Endgerät eingebaut worden sind. Damit muss der Hersteller des Secure Element das Secure Element bereits vor der Personalisierung aus seiner Verfügungsgewalt geben, beispielweise in die Verfügungsgewalt den Endgerät-Herstellers.

Die vollständige Produktionskette des Einbaus eines iUICC in ein mobiles Endgerät sieht typischerweise vor, dass zunächst ein Chipset erstellt wird, in dem ein Secure Element umfasst ist. Der Chipset Hersteller stellt das mit dem Secure Element ausgestattete Chipset an den Hersteller des mobilen Endgeräts bereit, der das Chipset mit dem integrierten Secure Element in das mobile Endgerät fest einbaut. Der Hersteller des mobilen Endgeräts baut in das Endgerät zudem einen externen NVM Speicher ein, der für das Secure Element bestimmt ist. Erst nach diesem Schritt ist ein Laden des Betriebssystems OS bzw. eine Personalisierung des Secure Element überhaupt physikalisch möglich.

Das Chipset einschließlich eines darin integrierten Secure Element kann als ein einziges System-on-Chip vorgesehen sein, das als ein monolithisches Bauelement in ein Endgerät eingelötet werden kann. Alternativ stellt der Secure Element Hersteller eine Secure Element Einheit her und stellt sie an einen Chipset Hersteller bereit. Der Chipset Hersteller integriert die Secure Element Einheit in ein Chipset für ein mobiles Endgerät, z.B. durch Auflöten der Secure Element Einheit auf eine Platine, auf die auch weitere Elemente des Chipset aufgelötet werden. Schließlich wird das Chipset in das Endgerät integriert, z.B. eingelötet.

Würde der Hersteller des Secure Element mit dem Secure Element auch das Betriebssystem und die Personalisierungsdaten ohne Weiteres an den Hersteller des mobilen Endgeräts übergeben, wären Betriebssystem und die Personalisierungsdaten vollständig außerhalb des Einflussbereichs des Herstellers des Secure Element. Der Hersteller des Endgeräts könnte Betriebssystem und die Personalisierungsdaten unter Umständen weitgehend beliebig verwenden, auch für Einsatzzwecke, die der Hersteller des Secure Element oder der Hersteller des Betriebssystems und der Personalisierungsdaten nicht billigen würde. Dies ist für den Herstellers des Secure Element und für den Hersteller des Betriebssystems und der Personalisierungsdaten ein Risiko und daher nicht wünschenswert.

Das Dokument EP3648493A1 offenbart ein Verfahren zur Personalisierung eines Chip in einem Chipset eines mobilen Endgeräts, durch Speichern eines mit einem Image-Protection-Schlüssel verschlüsselten Betriebssystems in das Chipset, so dass das Betriebssystem später im Chip ausführbar ist. Damit das Betriebssystem im Chip ausführbar ist, wird der Chip mit dem Image-Protection-Schlüssel ausgestattet. Dabei wird der Image-Protection-Schlüssel in zwei Schlüsselkomponenten aufgeteilt, und die eine Komponente an einen Chiphersteller und die andere Schlüsselkomponente an einen Endgerätehersteller ausgegeben, so dass keiner der beiden Hersteller über den vollständigen Image-Protection-Schlüssel verfügt. Die beiden Hersteller laden nacheinander ihre Schlüsselkomponenten in den Chip. Erst im Chip wird der Image-Protection-Schlüssel aus den beiden Schlüsselkomponenten wieder rekonstruiert, so dass ein in den Chip geladenes verschlüsseltes Betriebssystem im Chip entschlüsselt und zur Ausführung gebracht werden kann.

Das Dokument DE102017212994B3 offenbart ein Verfahren zum Durchführen einer Installationssitzung für ein elektronisches Teilnehmeridentitätsmodul, eSIM, in einem eUICC, wobei das eUICC mit einem eSIM-Server ein Geheimnis erzeugt, vom eSIM-Server ein verschlüsseltes eSIM-Paket empfängt und dieses mit dem Geheimnis entschlüsselt. Mittels einer zuvor vom eSIM-Server empfangenen Fehlerbeseitigungs-Konfiguration ist das eUICC in der Lage, das Geheimnis auch später noch zu erzeugen, beispielsweise um später zu Testzwecken erneut das verschlüsselte eSIM-Paket zu empfangen und zu entschlüsseln.

Das Dokument US9686076B2 offenbart ein Verfahren zum Transfer eines eSIM von einem Quell-Gerät auf ein Ziel-Gerät, wobei das eSIM für das Ziel-Gerät spezifisch verschlüsselt wird und im Quell-Gerät vernichtet wird.

Das Dokument US2018/097639A1 aus dem Stand der Technik offenbart ein Verfahren zur Personalisierung eines Secure Device, umfassend Ausstatten des Secure Device mit einem Betriebssystem. Hierbei wird ausgehend von einem öffentlichen Schlüssel des Device ein Device spezifischer Schlüssel abgeleitet, und ein Firmware Image mit dem abgeleiteten Device spezifischen Schlüssel verschlüsselt und in das Secure Device geladen.

Das Dokument EP2711858A1 aus dem Stand der Technik offenbart ein Verfahren zur Personalisierung einer Rechnereinrichtung, das ein Laden eines doppelt verschlüsselten Firmware Image in die Rechnereinrichtung geladen wird, darin zweimal entschlüsselt wird und in einen Speicher der Rechnereinrichtung gespeichert wird.

### Zusammenfassung der Erfindung

Der Erfindung liegt die Aufgabe zu Grunde, ein Verfahren zur Personalisierung eines in ein mobiles Endgerät festeingebauten Secure Element zu schaffen, bei dem der Hersteller des Secure Element oder/und der Hersteller der Betriebssystems Verfügungsgewalt über den Personalisierungsprozess behalten, und die Kontrolle über den Personalisierungsprozess nicht vollständig an den Hersteller des mobilen Endgeräts abgeben wird.

Die Aufgabe wird gelöst durch einen Verfahren nach Anspruch 1.

Beim erfindungsgemäßen Verfahren nach Anspruch 1 wird zunächst die Möglichkeit einer vertraulichen Kommunikation mit dem Secure Element geschaffen. Dazu erfolgt, vor dem Festeinbau des Chipset mit dem Secure Element in das mobile Endgerät, (a) in dem Secure Element ein Bereitstellen eines privaten SE-Schlüssels eines asymmetrischen SE-Schlüsselpaars in dem Secure Element, und Bereitstellen des öffentlichen SE-Schlüssels desselben asymmetrischen SE-Schlüsselpaars in einem außerhalb des Secure Element angeordneten Hardware Security Module HSM. Diese Schritte erfolgen vorzugsweise, solange das Chipset mit dem Secure Element in der Verfügungsgewalt des Secure Element/Chipset Herstellers oder des Herstellers oder Anbieters des Betriebssystems ist, auf alle Fälle noch nicht in der Verfügungsgewalt des Herstellers des mobilen Endgeräts.

Die Erzeugung des asymmetrischen SE-Schlüsselpaars erfolgt wahlweise in dem Secure Element, und der öffentliche SE-Schlüssel wird vom Secure Element an das Hardware Security Module übertragen (Modell der On-board key generation oder On-board Schlüsselgenerierung). Alternativ erfolgt die Erzeugung des asymmetrischen SE-Schlüsselpaars im Hardware Security Module, und der private SE-Schlüssel wird vom Hardware Security Module an das Secure Element übertragen (Modell der key injection oder Schüsselinjektion). Das für die Schlüsselinjektion verwendete Hardware Security Module kann dasselbe Hardware Security Module sein, das später für die Verschlüsselung des Speicherimage verwendet wird (siehe weiter unten), oder ein anderes Hardware Security Module, welches über die erforderlichen Schlüssel verfügt. Insbesondere können bei Bedarf erforderliche Schlüssel über geeignete Mechanismen von einem Hardware Security Module zu einem anderen Hardware Security Module übertragen werden.

Erst nach dem Bereitstellen des privaten SE-Schlüssels an das Secure Element und des öffentlichen SE-Schlüssels an das Hardware Security Module, wird das Secure Element an den Hersteller mobiler Endgeräte ausgeliefert, und dort (b) erfolgt der Festeinbau des Secure Element in ein mobiles Endgerät.

Wahlweise wird das Secure Element vor dem Bereitstellen an den Hersteller mobiler Endgeräte in ein Chipset eingebaut und das Chipset and den Hersteller mobiler Endgeräte geliefert, und hierdurch das Secure Element an den Hersteller mobiler Endgeräte bereitgestellt. Alternativ ist das Chipset ein vollintegriertes System-On-Chip, in dem auch das Secure Element bereits integriert ist.

Zu einem Zeitpunkt, nachdem der öffentliche SE-Schlüssel an das Hardware Security Module HSM übertragen worden ist, erfolgt c) in dem Hardware Security Module HSM, ein Erzeugen oder Bereitstellen eines asymmetrischen HSM-Schlüsselpaars, das einen öffentlichen HSM-Schlüssel und einen privaten HSM-Schlüssel umfasst; weiter erfolgt (d) in dem Hardware Security Module HSM, ausgehend von dem privaten HSM-Schlüssel und dem öffentlichen SE-Schlüssel, ein Ableiten eines mit dem Secure Element geteilten Geheimnisses, welches als zumindest ein symmetrischer Schlüssel gestaltet ist.

Das zwischen dem Hardware Security Module HSM und dem Secure Element geteilte Geheimnis ermöglicht, nachdem das Secure Element an den Hersteller des Endgeräts ausgeliefert ist, eine vertrauliche, für den Hersteller des Endgeräts nicht zugreifbare Kommunikation zwischen dem Hardware Security Module HSM und dem Secure Element. Selbst wenn das Hardware Security Module HSM später dem Hersteller des Endgeräts zur Verfügung gestellt wird, hat dieser keinen Zugriff auf die im HSM verarbeiteten Schlüssel und Daten.

Damit kann nun die eigentliche Personalisierung des Secure Element auf vertrauliche Weise erfolgen.

Dazu erfolgt (e) in dem Hardware Security Module HSM, ein Bereitstellen eines Betriebssystem-Pakets, von welchem zumindest ein Betriebssystem umfasst ist, und Verschlüsseln zumindest des Betriebssystems-Pakets mit einem Transportschlüssel, welcher durch das geteilte Geheimnis oder einen Teil davon gebildet ist, oder der von dem geteilten Geheimnis abgeleitet ist. Durch die Verschlüsselung mit dem Transportschlüssel wird ein verschlüsseltes Betriebssystem-Paket erzeugt.

Weiter erfolgt, (f) im Hardware Security Module HSM, ein Erzeugen eines zur Programmierung des Secure Element geeigneten und eingerichteten Speicherimage BLOB, von dem zumindest das verschlüsselte Betriebssystem-Paket und der öffentlichen HSM-Schlüssel umfasst sind.

Nachdem das verschlüsselte Betriebssystem-Paket und das Speicherimage im Hardware Security Module erzeugt worden sind, erfolgt ein (g) Betreiben einer Datenverbindung zwischen dem Hardware Security Module HSM und dem Secure Element und ein Übermitteln des Speicherimage von dem Hardware Security Module (an einen Personalisierungsserver und von dort weiter) an das in dem mobilen Endgerät festeingebaute Secure Element. Damit die Datenverbindung betrieben werden kann, kann das mit dem Speicherimage ausgestattete Hardware Security Module physisch an den Hersteller des Endgeräts übergeben werden. Alternativ kann eine Datenfernverbindung zwischen dem Hardware Security Module HSMund einem Personalisierungsserver beim Hersteller des Endgeräts betrieben werden, und das Speicherimage wird vom Hardware Security Module über die Datenfernverbindung und den Personalisierungsserver in das Secure Element geladen. Die Datenverbindung vom Hardware Security Module zum Secure Element verläuft wahlweise physikalisch vom Hardware Security Module über das Endgerät zum Secure Element.

Hiermit ist der außerhalb des Secure Element und außerhalb des Endgeräts erfolgende Personalisierungsvorgang abgeschlossen.

Die weiteren Schritte erfolgen innerhalb der Einheit, die durch das Secure Element und das mobile Endgerät gebildet ist.

Zunächst erfolgt, (h) im Secure Element, ein Extrahieren des öffentlichen HSM-Schlüssels aus dem Speicherimage, und, ausgehend von dem (im Secure Element selbst vorgesehenen) privaten SE-Schlüssel und dem empfangenen öffentlichen HSM-Schlüssel, ein Ableiten des geteilten Geheimnisses und des Transportschlüssels, und ein Entschlüsseln des verschlüsselten Betriebssystem-Pakets mittels des Transportschlüssels.

Weiter erfolgt, (i) im Secure Element, ein Bereitstellen, Erzeugen oder Ableiten eines für das Secure Element individuellen symmetrischem NVM-Verschlüsselungsschlüssels, der von dem Transportschlüssel unterschiedlich ist, und ein Verschlüsseln des entschlüsselte Betriebssystem-Pakets mit dem NVM-Verschlüsselungsschlüssel. Der NVM-Verschlüsselungsschlüssel ist der permanente (dauerhafte) Schlüssel, mit dem das Betriebssystem und etwaige Personalisierungsdaten dauerhaft verschlüsselt werden.

Des Weiteren erfolgt, (j) durch das Secure Element, ein Abspeichern des zunächst entschlüsselten und mit dem individuellen symmetrischem NVM-Verschlüsselungsschlüssel wieder verschlüsselten Betriebssystem-Pakets in einen außerhalb des Secure Element angeordneten NVM-Speicher des mobilen Endgeräts. Dabei wird durch das Abspeichern des Betriebssystem-Pakets im NVM-Speicher ein im Secure Element ausführbares Betriebssystem bereitgestellt. Vorzugsweise ist das Betriebssystem-Paket exklusiv im Secure Element ausführbar, mit anderen Worten im Secure Element ausführbar und im mobilen Endgerät, in einem anderen Chip des Chipset des Endgeräts, nicht ausführbar.

Durch das obenstehend beschriebene Verfahren wurde das integrierte Secure Element personalisiert, wobei ein Betriebssystem in den NVM-Speicher des mobilen Endgeräts gespeichert wurde. Aufgrund der vor Auslieferung des Secure Element zwischen dem Secure Element und dem Hardware Security Module eingerichteten Verschlüsselungs-Infrastruktur behält dabei der Secure Element Hersteller und/oder der Betriebssystem-Hersteller die Verfügungsgewalt über das Betriebssystem und den Personalisierungsvorgang.

Daher ist gemäß Anspruch 1 ein Verfahren zur Personalisierung eines in ein mobiles Endgerät festeingebauten Secure Element geschaffen, bei dem der Hersteller der Secure Element oder/und der Hersteller der Betriebssystems Verfügungsgewalt über den Personalisierungsprozess behalten, und die Kontrolle über den Personalisierungsprozess nicht vollständig an den Hersteller des mobilen Endgeräts abgeben wird.

Die Ableitung des geteilten Geheimnisses erfolgt gemäß manchen Ausführungsformen der Erfindung nach dem Elliptic Curve Integrated Encryption Scheme, oder kurz ECIES, bei manchen nach dem Diffie-Hellman DH Schlüsselableitungsverfahren, gemäß manchen Ausführungsformen nach dem Elliptische Kurven Diffie Hellman ECDH Schlüsselableitungsverfahren. Beim Elliptic Curve Integrated Encryption Scheme, oder kurz ECIES, DH und ECDH Verfahren wird jeweils ein Verschlüsselungsschlüssel und ein Authentisierungsschlüssel (bei ECIES: MAC Schlüssel, wobei MAC für Message Authentication Key steht) abgeleitet. Wahlweise wird auch bei der Erfindung sowohl der Transportschlüssel (der Transportschlüssel ist ein Verschlüsselungsschlüssel) als auch ein Authentisierungsschlüssel abgeleitet, unabhängig davon ob ECIES, DH oder ECDH oder ein anderes Schlüsselableitungsverfahren eingesetzt wird.

Als Transportschlüssel und/oder NVM-Verschlüsselungsschlüssel sind gemäß manchen Ausführungsformen der Erfindung Schlüssel für das Kryptosystem Advanced Encryption Standard AES vorgesehen. Alternativ können als Transportschlüssel und/oder NVM-Verschlüsselungsschlüssel DES oder Triple-DES Schlüssel vorgesehen sein (DES = Data Encryption Standard). Derzeit ist AES von den angeführten Algorithmen der verbreitetste Algorithmus, DES gilt hingegen als veraltet und wird nur noch wenig verwendet.

Das Betriebssystem-Paket kann zusätzlich zum Betriebssystem eine oder mehrere der folgenden Komponenten umfassen: Personalisierungsdaten für das Betriebssystem, ein oder mehrere Subskriptions-Profile oder Profile, Profildaten von Profilen, ein oder mehrere Applikationen zum Betrieb hierarchisch unterhalb der Profile oder / und zum Betrieb unabhängig von Profilen, Personalisierungsdaten für Profile, Personalisierungsdaten für Applikationen, sonstige Personalisierungsdaten; ein oder mehrere Signaturen über Daten des Betriebssystem-Pakets, ein oder mehrere Prüfsummen, ein oder mehrere Message Authentication Codes MACs.

Das im externen NVM-Speicher gespeicherte Betriebssystem kann wahlweise exklusiv im Secure Element, dabei ggf im Prozessor und internen Arbeitsspeicher des Secure Element, zur Ausführung gebracht werden.

Das Secure Element ist wahlweise als embedded Secure Element oder integrated Secure Element gestaltet.

Die Personalisierung wird wahlweise in Reaktion auf einen Auftrag zur Personalisierung gestartet, in dem ein Identifier des personalisierenden Secure Element enthalte ist, z.B. ein Unique Identifier UID. Ein solcher Auftrag wird beispielsweise von einem Betriebssystem-Hersteller an einen Endgerät-Hersteller gesendet, und dabei physisch in ein zur Personalisierung verwendetes Personalisierungssystem, insbesondere ein Hardware Security Module HSM eines solchen Personalisierungssystems bereitgestellt, das der Endgerät-Hersteller zur Personalisierung des Secure Element verwendet.

Wahlweise wird ein Batch umfassend eine Mehrzahl von Secure Elements im Batch-Betrieb personalisiert. Ein Auftrag für ein solches Batch enthält mehrere Identifier mehrerer zu personalisierender Secure Elements, z.B. UIDs.

Die Erfindung schafft zusammenfassend ein Verfahren zur Personalisierung eines Secure Element, das in ein mobiles Endgerät festeingebaut wird, umfassend Vereinbarung eines geteilten Geheimnisses zwischen dem Secure Element und einem Hardware Security Module, HSM, Verschlüsselung eines Betriebssystems - und ggf. von Personalisierungsdaten und/oder ein oder mehreren Profilen - im HSM basierend auf dem geteilten Geheimnis und Übertragen des verschlüsselten Betriebssystems an das Secure Element, sowie Umschlüsseln des Betriebssystems im Secure Element zur Abspeicherung in einem NVM-Speicher des mobilen Endgeräts, der außerhalb des Secure Element liegt.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: in schematischer Darstellung ein Verfahren zur Personalisierung eines Secure Element, gemäß Ausführungsformen der Erfindung;
- Fig. 2: in schematischer Darstellung vier Anordnungsmöglichkeiten eines Chipset und eines Secure Element in einem Endgerät, geeignet für das Verfahren gemäß der Erfindung;
- Fig. 3: in schematischer Darstellung eine Anordnungsmöglichkeit eines Chipset und eines embedded Secure Element in einem Endgerät, geeignet für das Verfahren gemäß der Erfindung;
- Fig. 4: in schematischer Darstellung eine Anordnungsmöglichkeit eines Chipset und zweier integrated Secure Elements in einem Endgerät, geeignet für das Verfahren gemäß der Erfindung;
- Fig. 5: einen Personalisierungsablauf, gemäß einer Ausführungsform der Erfindung;
- Fig. 6: ein Speicherimage, gemäß einer Ausführungsform der Erfindung.

### Detaillierte Beschreibung von Ausführungsbeispielen

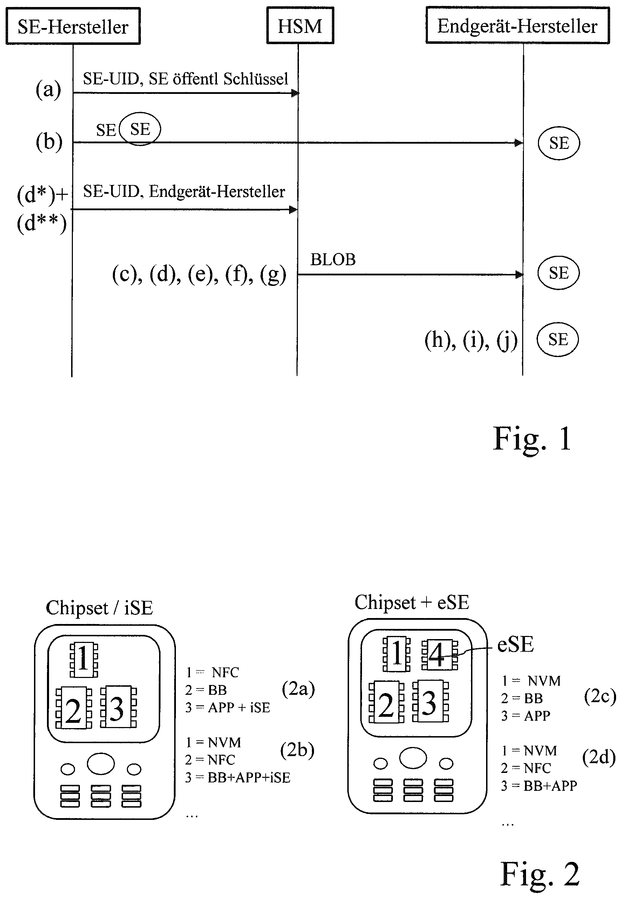

Fig. 1 zeigt in schematischer Darstellung ein Verfahren zur Personalisierung eines Secure Element, gemäß Ausführungsformen der Erfindung.

### Das Verfahren umfasst folgende Schritte.

Schritt (a): Bereitstellen des Secure Element SE bei einem Secure Element Hersteller. Im Secure Element SE, Erzeugen oder/und eines dem Secure Element zugeordneten asymmetrischen SE-Schlüsselpaars, das einen privaten SE-Schlüssel und einen öffentlichen SE-Schlüssel umfasst. Der private SE-Schlüssels verlässt das Secure Element nicht. Übermitteln des öffentlichen SE-Schlüssels und eines Identifikators SE-UID des Secure Element SE, beispielsweise des ETSI Unique Identifier UID, an ein außerhalb des Secure Element SE angeordnetes Hardware Security Module HSM. Das Übermitteln des öffentlichen SE-Schlüssels kann über mehrere Stationen erfolgen. Beispielsweise wird der öffentlichen SE-Schlüssel zunächst aus dem Secure Element SE an einen Server des Secure-Element-Herstellers übermittelt und anschließend vom Server des Secure-Element-Herstellers in ein Hardware Security Module HSM übermittelt.

Die obenstehend beschriebene Form der Schlüsselverteilung entspricht einem Konzept der SE-internen Schlüsselableitung, auch on-board (im SE) Schlüsselableitung oder on-board Schlüsselgenerierung genannt.

Bei einem alternativen Konzept der Schlüsselverteilung, auch Schlüsselinjektion genannt, wird das dem Secure Element zugeordnete asymmetrischen SE-Schlüsselpaar im Hardware Security Module HSM erzeugt oder/und abgeleitet. Der öffentliche SE-Schlüssel wird später durch das HSM selbst oder durch ein anderes HSM verwendet, und der private SE-Schlüssel wird vom Hardware Security Module HSM an das Secure Element SE übermittelt, oder anders ausgedrückt vom Hardware Security Module HSM aus in das Secure Element SE injiziert. Anschließend verlässt der private SE-Schlüssel das Secure Element SE nicht mehr.

Das Hardware Security Module HSM wird danach beispielsweise einem Hersteller von Betriebssystemen bereitgestellt. Dies kann wahlweise durch physisches Bereitstellen des Hardware Security Module HSM an den Hersteller von Betriebssystemen erfolgen. Alternativ kann das Hardware Security Module HSM physisch beim Secure-Element-Hersteller Verbleiben und der Betriebssystem-Hersteller durch Betreiben einer Datenfernverbindung Zugriff auf das Hardware Security Module HSM bekommen. Auch ist es möglich, dass Schlüssel über einen gesicherten Mechanismus von einem Hardware Security Module HSM zu einem anderen Hardware Security Module HSM übermittelt werden, so dass im Personalisierungsvorgang mehrere Hardware Security Module HSM zum Einsatz kommen.

Schritt (b): Bereitstellen des Secure Element SE an einen Hersteller mobiler Endgeräte und Festeinbau des Secure Element SE in ein mobiles Endgerät. In das mobile Endgerät werden oder wurden zu irgendeinem Zeitpunkt die übrigen Komponenten des herkömmlichen Chipset des Endgeräts eingebaut, sowie ein für das Secure Element SE bestimmter nichtflüchtiger NVM-Speicher. Das Secure Element SE kann wahlweise als eigenes Bauelement an den Endgerät-Hersteller bereitgestellt werden. Alternativ wird das Secure Element SE zunächst an einen Chipset-Hersteller bereitgestellt und von diesem in das Chipset eingebaut. Der Chipset-Hersteller stellt das Chipset mit dem Secure Element an den Endgerät-Hersteller bereit. Gemäß einer weiteren Alternative ist das Secure Element SE auf einem Einzelchip oder System-on-Chip fertigungstechnisch vollintegriert, als Teilstruktur auf der Chipfläche des Chipset. In diesem Fall stellt der Chipset-Hersteller das Chipset inklsive des Secure Element SE an den Endgerät-Hersteller bereit. Die Teilstruktur des Secure Element SE kann dabei in Auftrag eines Secure Element Herstellers gefertigt sein, oder der Chipset-Hersteller ist zugleich der Secure Element Hersteller.

Das mobile Endgerät beim Endgerät-Hersteller ist nun bereit für eine Personalisierung des Secure Element SE, durch Einspielen eines Betriebssystems und von Personalisierungsdaten in die Kombination aus Endgerät und Secure Element SE.

Der Endgerät-Hersteller hat Zugriff auf ein Hardware Security Module HSM, in welchem der öffentliche Schlüssel des zu personalisierenden Secure Element SE enthalten ist. Das kann hierzu HSM räumlich beim Endgerät-Hersteller bereitgestellt werden, oder über eine Daten-Fernverbindung angebunden sein.

Schritt (d*): um die Personalisierung des Secure Element SE zu veranlassen, sendet ein Hersteller von Betriebssystemen für Secure Elements einen Auftrag, das Secure Element SE mit einem Betriebssystem und Personalisierungsdaten zu personalisieren, an das Hardware Security Module HSM. In dem Auftrag ist ein Identifikator des zu personalisierenden Secure Element SE, z.B. der Unique Identifier UID des Secure Element SE, enthalten, sowie bei Bedarf eine Angabe des betroffenen Endgerät-Herstellers.

Statt eines Auftrags für nur ein einziges Secure Element SE, kann (d**) ein Auftrag zu Personalisierung mehrerer Secure Elements vorgesehen sein. In diesem Fall enthält der Auftrag die Identifierer, z.B. UIDs, aller zu personalisierenden Secure Elements.

Spätestens nun erfolgt Schritt (c): in dem Hardware Security Module HSM, Erzeugen oder Bereitstellen eines asymmetrischen HSM-Schlüsselpaars, das einen öffentlichen HSM-Schlüssel und einen privaten HSM-Schlüssel umfasst. Dieser Schritt (c) kann auch schon im HSM erfolgt sein, bevor im HSM der Auftrag zur Personalisierung empfangen worden ist.

Erst in Reaktion auf dem Empfang des Auftrags erfolgt hingegen Schritt (d): in dem Hardware Security Module HSM, ausgehend von dem privaten HSM-Schlüssel und dem öffentlichen SE-Schlüssel, Ableiten eines mit dem Secure Element SE geteilten Geheimnisses, welches als zumindest ein symmetrischer Schlüssel gestaltet ist. Wahlweise umfasst das geteilte Geheimnis einen symmetrischen Schlüssel, vorzugsweise jedoch zwei symmetrische Schlüssel. Der eine bzw. der erste Schlüssel ist ein Transportschlüssel (der Transportschlüssel ist ein Verschlüsselungsschlüssel), oder aus dem einen/ ersten Schlüssel wird ein solcher Transportschlüssel abgeleitet. Der zweite Schlüssel ist ein Authentisierungsschlüssel, oder aus dem zweiten Schlüssel wird ein Authentisierungsschlüssel abgeleitet.

Weiter erfolgt Schritt (e): in dem Hardware Security Module HSM, Bereitstellen eines Betriebssystem-Pakets, von welchem das Betriebssystem und die Personalisierungsdaten umfasst sind. Wahlweise können in dem Betriebssystem-Paket zusätzlich bereits ein oder mehrere Applikationen für das Secure Element SE vorgesehen sein, die später in dem Secure Element SE ausführbar sein sollen. Wahlweise wird zusätzlich eine Prüfsumme, beispielsweise ein Message Authentication Code MAC.

Das Betriebssystems-Paket wird mit dem zuvor abgeleiteten Transportschlüssel verschlüsselt, um ein verschlüsseltes Betriebssystem-Paket zu erzeugen.

Nach dem Verschlüsseln der Betriebssystem-Pakets erfolgt Schritt (f): im Hardware Security Module HSM, Erzeugen eines zur Programmierung des Secure Element SE geeigneten und eingerichteten Speicherimage BLOB, von dem zumindest das verschlüsselte Betriebssystem-Paket und der öffentliche HSM-Schlüssel umfasst sind, sowie falls vorhanden die Prüfsumme, z.B. der Message Authentication Code MAC.

Nun erfolgt Schritt (g): Betreibens einer Datenverbindung zwischen dem Hardware Security Module HSM und dem Secure Element SE und Übermitteln des Speicherimage BLOB von dem Hardware Security Module HSM an das in dem mobilen Endgerät festeingebaute Secure Element SE, und Empfangen des Speicherimage BLOB im Secure Element SE.

Nachdem das Speicherimage BLOB im Secure Element SE empfangen worden ist, erfolgt Schritt (h): im Secure Element SE, Extrahieren des öffentlichen HSM-Schlüssels aus dem Speicherimage BLOB, und, ausgehend von dem privaten SE-Schlüssel und dem öffentlichen HSM-Schlüssel, Ableiten des geteilten Geheimnisses und des Transportschlüssels und Entschlüsseln des verschlüsselten Betriebssystem-Pakets mittels des Transportschlüssels.

Weiter erfolgt Schritt (i): im Secure Element SE, Bereitstellen, Erzeugen oder Ableiten eines für das Secure Element SE individuellen symmetrischem NVM-Verschlüsselungsschlüssels, der von dem Transportschlüssel unterschiedlich ist, und Verschlüsseln des entschlüsselte Betriebssystem-Pakets mit dem NVM-Verschlüsselungsschlüssel.

Nach dem Verschlüsseln des entschlüsselte Betriebssystem-Pakets mit dem NVM-Verschlüsselungsschlüssel erfolgt Schritt (j): durch das Secure Element SE, Abspeichern des entschlüsselten und mit dem individuellen symmetrischem NVM-Verschlüsselungsschlüssel wieder verschlüsselten Betriebssystem-Pakets in einen außerhalb des Secure Element SE angeordneten NVM-Speicher des mobilen Endgeräts NVM. Dabei wird wobei durch das Abspeichern des Betriebssystem-Pakets im NVM-Speicher NVM das Secure Element SE mit einem im Secure Element SE ausführbaren Betriebssystem ausgestattet, das bereits mit den Personalisierungsdaten personalisiert ist, und dem ggf bereits die ebenfalls im Betriebssystem-Paket bereitgestellten ein oder mehreren Applikationen zur Verfügung stehen.

Fig. 2 zeigt in schematischer Darstellung vier Anordnungsmöglichkeiten eines Chipset und eines Secure Element in einem Endgerät, geeignet für das Verfahren gemäß der Erfindung.

Gemäß Fig. 2(a) umfasst das Chipset ein erstes NFC-Chip-Modul 1 (NFC = Near Field Communication), ein zweites Baseband-Processor-Chip-Modul BB 2, und ein drittes Chip-Modul 3, auf dem ein Application-Processor APP und ein integriertes Secure Element iSE integriert sind.

Gemäß Fig. 2(b) umfasst das Chipset ein erstes NVM-Chip-Modul 1, auf dem ein nichtflüchtiger NVM-Speicher integriert ist, der dem Secure Element iSE (vgl. nachfolgend) zugeordnet ist, ein zweites NFC-Chip-Modul NFC 2, und ein drittes Chip-Modul 3, auf dem ein Baseband-Processor BB, ein Application-Processor APP und ein integriertes Secure Element iSE integriert sind.

Gemäß Fig. 2(c) umfasst das Chipset ein erstes NVM-Chip-Modul 1, auf dem ein nichtflüchtiger NVM-Speicher integriert ist, der dem Secure Element iSE (vgl. nachfolgend) zugeordnet ist, ein zweites Baseband-Processor-Chip-Modul BB 2, und ein drittes Application-Processor-Chip-Modul 3. Zusätzlich zum Chipset des Endgerät ist im Endgerät ein embedded Secure Element eSE auf einem vierten Chip-Modul 4 vorgesehen.

Gemäß Fig. 2(d) umfasst das Chipset ein erstes NVM-Chip-Modul 1, auf dem ein nichtflüchtiger NVM-Speicher integriert ist, der dem Secure Element iSE (vgl. nachfolgend) zugeordnet ist, ein zweites NFC-Chip-Modul NFC 2, und ein drittes Chip-Modul 3, auf dem ein Baseband-Processor BB und ein Application-Processor APP vorgesehen sind. Zusätzlich zum Chipset des Endgerät ist im Endgerät ein embedded Secure Element eSE auf einem vierten Chip-Modul 4 vorgesehen.

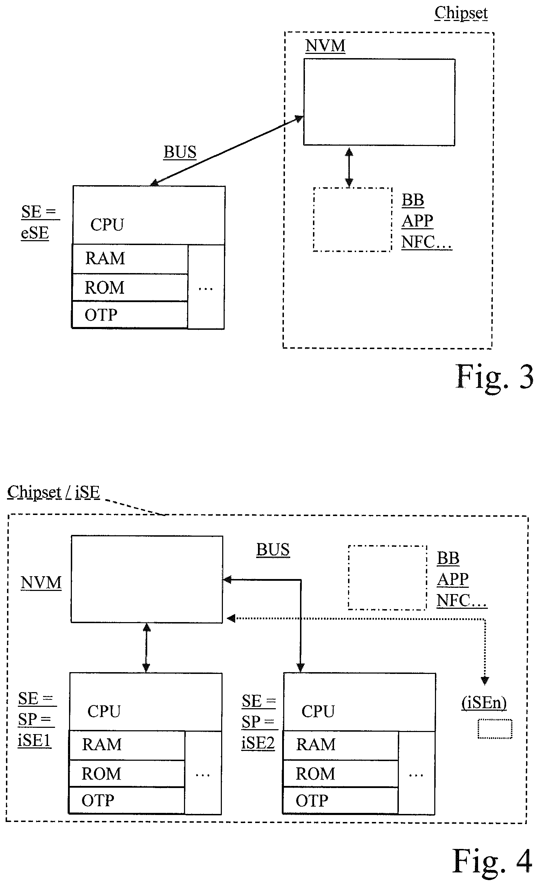

Fig. 3 zeigt in schematischer Darstellung eine Anordnungsmöglichkeit eines Chipset und eines embedded Secure Element eSE in einem Endgerät, geeignet für das Verfahren gemäß der Erfindung. Das embedded Secure Element eSE umfasst einen Secure Processor CPU, einen internen Arbeitsspeicher RAM des embedded Secure Element eSE, einen internen permanenten ROM-Speicher ROM des embedded Secure Element eSE und einen einmalbeschreibbaren permanenten OTP-Speicher OTP des embedded Secure Element eSE. Die Speicherkapazität des internen permanenten ROM-Speicher ROM und des einmalbeschreibbaren permanenten OTP-Speicher OTP ist nur sehr gering. Im Chipset des Endgeräts ist ein dem embedded Secure Element eSE zugeordneter, für dieses nutzbarer nichtflüchtiger NVM-Speicher NVM vorgesehen. Weitere Elemente des Chipset des Endgeräts wie Application-Processor APP, Baseband-Processor (Modem) BB und NFC-Processor NFC sind in Fig. 3 nur angedeutet.

Fig. 4 zeigt in schematischer Darstellung eine Anordnungsmöglichkeit eines Chipset und zweier integrated Secure Elements iSE1, iSE2 in einem Endgerät, geeignet für das Verfahren gemäß der Erfindung. Der innere Aufbau jedes integrated Secure Element iSE1, iSE2 mit CPU, RAM, ROM, OTP ist im Wesentlichen derselbe wie der des in Fig. 3 gezeigten embedded Secure Element eSE. Im Unterschied zum embedded Secure Element eSE sind die integrated Secure Element iSE1, iSE2 direkt in das Chipset des Endgeräts integriert. Im Chipset des Endgeräts ist ein den integrated Secure Elements iSE1, iSE2 zugeordneter, für diese nutzbarer nichtflüchtiger NVM-Speicher NVM vorgesehen, der für jedes der beiden integrated Secure Elements iSE1, iSE2 einen eigenen Speicherbereich hat, der nur für das jeweilige iSE zugreifbar ist. Alternativ kann für jedes der integrated Secure Elements iSE1, iSE2 ein eigener zugeordneter, für dieses nutzbarer nichtflüchtiger NVM-Speicher NVM vorgesehen sein. Weitere Elemente des Chipset des Endgeräts wie Application-Processor APP, Baseband-Processor (Modem) BB und NFC-Processor NFC sind in Fig. 4 nur angedeutet.

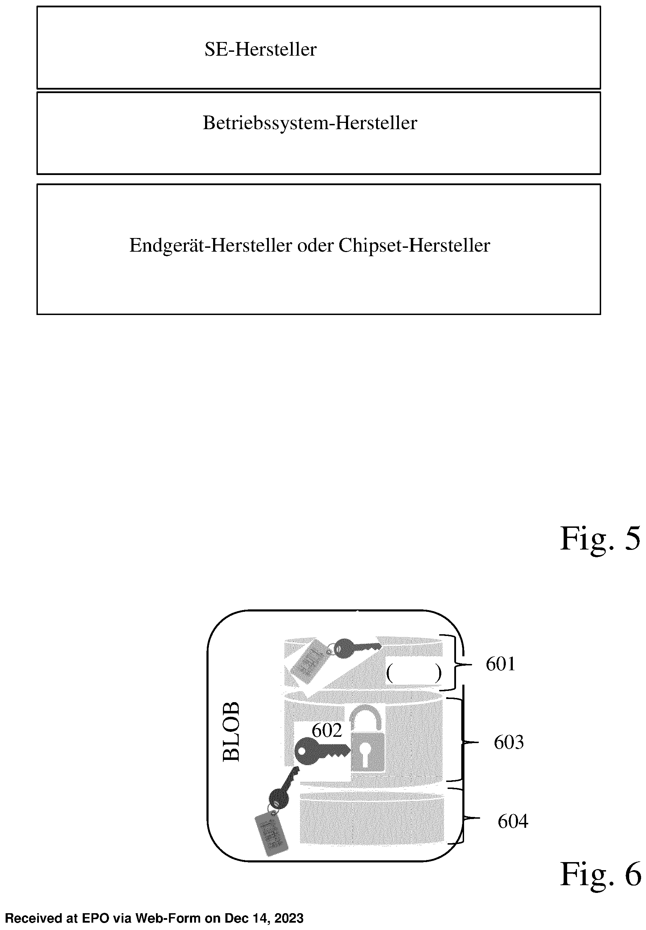

Fig. 5 zeigt einen Personalisierungsablauf, gemäß einer Ausführungsform der Erfindung.

Fig. 5: Beim SE-Hersteller: - Erzeuge als SE-Schlüsselpaar: ECC-SchlüsselPaar (privat/ öffentlich); - Öffentlichen SE-Schlüssel (öffentlicher SE-ECC-Schlüssel) und UID aus SE auslesen; - Sende UID und öffentlichen SE-Schlüssel an Betriebssystem-Hersteller.

Fig. 5: Beim Betriebssystem-Hersteller: - Erzeuge mit dem öffentlichen SE ECC-Schlüssel und eigenem privaten OS-ECC-Schlüssel einen Transportschlüssel
- Erzeuge Speicherimage BLOB umfassend Betriebssystem und Personalisierungsdaten und den öffentlichen OS-ECC-Schlüssel zum privaten OS-ECC-Schlüssel; - Verschlüssle BLOB mit dem Transportschlüssel; - Signatur über Speicherimage BLOB berechnen mittels eines eigenen Signaturschlüssels des Betriebssystem-Herstellers.

Fig. 5: Beim Endgerät-Hersteller oder Chipset-Hersteller:
Secure Element SE hat einen initialen Bootloader. Ersetze mittels eines Hardware Security Module HSM im Secure Element SE den initialen Bootloader durch einen Betriebssystem-Hersteller-Bootloader. Der Betriebssystem-Hersteller-Bootloader umfasst den Signaturschlüssel, mit dem die Signatur über das Speicherimage BLOB erzeugt worden ist. Extrahiere den öffentlichen OS-ECC-Schlüssel aus dem Speicherimage BLOB. Erzeuge im HSM mit dem privaten SE-ECC-Schlüssel und dem öffentlichen ECC-Schlüssel den Transportschlüssel; es ist der gleiche Transportschlüssel, der beim Betriebssystem-Hersteller mit dem öffentlichen SE-ECC-Schlüssel und dem privaten ECC-Schlüssel abgeleitet worden ist. Entschlüssle mit dem Transportschlüssel Schritt für Schritt die Daten/ Code-Segmente von Betriebssystem und Personalisierungsdaten aus dem Speicherimage BLOB. Verschlüssle Daten/Code-Segmente von Betriebssystem und Personalisierungsdaten mit einem SEindividuellen NVM-Verschlüsselungs-Schlüssel und schreibe das so erzeugte Chiffrat Schritt für Schritt in den externen NVM-Speicher im Chipset des Endgeräts. Verifiziere die Signatur über das Speicherimage BLOB mit dem Signaturschlüssel.

Fig. 6 zeigt ein Speicherimage BLOB, gemäß einer Ausführungsform der Erfindung. Der BLOB umfasst ein Betriebssystem einschließlich Personalisierungsdaten, und ein Profil (Subskriptions-Profil).

Anhand von Fig. 6 wird die Erzeugung, Struktur und Verwendung eines Speicherimage BLOB unter Mitwirkung eines Betriebssystem-Herstellers erläutert.

601: Der Betriebssystem-Hersteller erzeugt in einem HSM einen BLOBindividuellen öffentlichen ECC-Schlüssel, der als Grundlage für ein ECIES (Elliptic Curve Integrated Encryption Scheme) Verfahren verwendet wird.

602: Chip-individueller BLOB-Verschlüsselungs-Schlüssel (AES128): Dieser Schlüssel wird zur Ver-/ Entschlüsselung der "BLOB-Daten" verwendet. Dieser Schlüssel wird NICHT im BLOB übertragen, er ist die Ausgabe des ECIES (Bei Berechnung im SE: Eingabe: SE-individueller privater ECC-Schlüssel + G+D-BLOB-individueller öffentlicher ECC-Schlüssel; Ausgabe: geteiltes Geheimnis (shared secret). KDF(shared secret) = BLOB-Verschlüsselungsschlüssel. (Mit ECIES wird auch ein MAC-ing-Schlüssel generiert).

603: Die "BLOB-Daten", die aus dem OS-Code (Betriebssystem-Code) und den Profildaten (einschließlich chip-individueller MNO-Zugangsdaten) bestehen. Dieses Segment wird mit dem chipindividuellen BLOB-Verschlüsselungsschlüssel verschlüsselt übertragen (Dieses (verschlüsselte) Segment sollte zusätzlich MAC-aktiviert werden).

604: Signatur über den BLOB: Die Signatur wird mit einem Betriebssystem-Hersteller-Signaturschlüssel (innerhalb des Betriebssystem-Hersteller -HSM) über die reinen BLOB-Daten erzeugt - die Signatur selbst wird jedoch durch den chipindividuellen BLOB-Verschlüsselungsschlüssel verschlüsselt. Der (Betriebssystem-Hersteller)-Signatur-Verifizierungsschlüssel wird in eine angepasste Version des Bootloaders integriert und die Signatur wird während des Ladens des BLOBs in iSE/externes NVM verifiziert.

Nachfolgend wird ein Sicheres Personalisierungskonzept: ECIES - Elliptic Curve Integrated Encryption Scheme - (mit ECDH) erläutert, gemäß einer Ausführungsform der Erfindung. OS = Betriebssystem.
1. Ein ECC-Schlüsselpaar wird im iSE on-chip generiert.
2. Öffentlichen ECC-Schlüssel von iSE an G+D-HSM senden.
3. OS-Hersteller-HSM generiert für jedes BLOB einen Zufallswert (privater ECC-Schlüssel) und berechnet den entsprechenden öffentlichen ECC-Schlüssel.
4. Im G+D-HSM: öffentlicher (iSE) ECC-Schlüssel + privater (G+D) ECC-Schlüssel = geteiltes Geheimnis KDF(Shared secret) = geteiltes (geheimes) symmetrisches Schlüsselpaar (individueller Chip/BLOB- und MACing-Schlüssel).
5. Im OS-Hersteller-HSM: Mit diesem symmetrischen Schlüssel werden die BLOB-Daten verschlüsselt.
6. Das gesamte Paket (OS-Hersteller-öffentlicher ECC-Schlüssel + verschlüsseltes (und signiertes) BLOB wird an den Endgerätehersteller gesendet und von diesem in iSE geladen.
7. Im iSE: öffentlicher (OS-Hersteller) ECC-Schlüssel (aus dem BLOB-Paket) + privater (iSE) ECC-Schlüssel = geteiltes Geheimnis KDF(Shared secret) = geteiltes (geheimes) symmetrisches Schlüsselpaar (individueller Chip/BLOB- und MACing-Schlüssel).
8. Im iSE: Verwenden der symmetrischen Schlüssel für die Entschlüsselung der BLOB-Daten und die MAC-Verifizierung.

## Patentansprüche

1. Verfahren zur Personalisierung eines Secure Element (SE), das in ein mobiles Endgerät festeingebaut wird, das Personalisieren umfassend Ausstatten des Secure Element (SE) mit einem im Secure Element (SE) ausführbaren Betriebssystem, das Verfahren umfassend die Schritte:
(a) Bereitstellen des Secure Element (SE), und, vor dem Festeinbau des Secure Element (SE) in das mobile Endgerät, Bereitstellen eines privaten SE-Schlüssels eines asymmetrischen SE-Schlüsselpaars in dem Secure Element, und Bereitstellen des öffentlichen SE-Schlüssels desselben asymmetrischen SE-Schlüsselpaars in einem außerhalb des Secure Element (SE) angeordneten Hardware Security Module (HSM);
(b) nach dem Bereitstellen des privaten SE-Schlüssels an das Secure Element (SE) und des öffentlichen SE-Schlüssels an das Hardware Security Module (HSM), Bereitstellen des Secure Element (SE) an einen Hersteller des mobilen Endgeräts und Festeinbau des Secure Element (SE) in ein mobiles Endgerät;
(c) in dem Hardware Security Module (HSM), Erzeugen oder Bereitstellen eines asymmetrischen HSM-Schlüsselpaars, das einen öffentlichen HSM-Schlüssel und einen privaten HSM-Schlüssel umfasst;
(d) in dem Hardware Security Module (HSM), ausgehend von dem privaten HSM-Schlüssel und dem öffentlichen SE-Schlüssel, Ableiten eines mit dem Secure Element geteilten Geheimnisses, welches als zumindest ein symmetrischer Schlüssel gestaltet ist;
(e) in dem Hardware Security Module (HSM), Bereitstellen eines Betriebssystem-Pakets, von welchem zumindest ein Betriebssystem - oder zumindest ein Teil eines Betriebssystems - umfasst ist, und Verschlüsseln zumindest des Betriebssystems-Pakets mit einem Transportschlüssel, welcher durch das geteilte Geheimnis oder einen Teil davon gebildet ist, oder der von dem geteilten Geheimnis abgeleitet ist, um ein verschlüsseltes Betriebssystem-Paket zu erzeugen;
(f) im Hardware Security Module (HSM), Erzeugen eines zur Programmierung des Secure Element (SE) geeigneten und eingerichteten Speicherimage (BLOB), von dem zumindest das verschlüsselte Betriebssystem-Paket und der öffentlichen HSM-Schlüssel umfasst sind;
(g) Betreibens einer Datenverbindung zwischen dem Hardware Security Module (HSM) und dem Secure Element (SE) und Übermitteln des Speicherimage (BLOB) von dem Hardware Security Module (HSM) an das in dem mobilen Endgerät festeingebaute Secure Element (SE);
(h) im Secure Element (SE), Extrahieren des öffentlichen HSM-Schlüssels aus dem Speicherimage (BLOB), und, ausgehend von dem privaten SE-Schlüssel und dem öffentlichen HSM-Schlüssel, Ableiten des geteilten Geheimnisses und des Transportschlüssels und Entschlüsseln des verschlüsselten Betriebssystem-Pakets mittels des Transportschlüssels;
(i) im Secure Element (SE), Bereitstellen, Erzeugen oder Ableiten eines für das Secure Element (SE) individuellen symmetrischem NVM-Verschlüsselungsschlüssels, der von dem Transportschlüssel unterschiedlich ist, und Verschlüsseln des entschlüsselte Betriebssystem-Pakets mit dem NVM-Verschlüsselungsschlüssel;
(j) durch das Secure Element (SE), Abspeichern des entschlüsselten und mit dem individuellen symmetrischem NVM-Verschlüsselungsschlüssel wieder verschlüsselten Betriebssystem-Pakets in einen außerhalb des Secure Element (SE) angeordneten NVM-Speicher des mobilen Endgeräts (NVM), wobei durch das Abspeichern des Betriebssystem-Pakets im NVM-Speicher (NVM) das Secure Element (SE) mit einem im Secure Element (SE) ausführbaren Betriebssystem ausgestattet wird.

2. Verfahren nach Anspruch 1,
(k) wobei das Secure Element (SE) einen Arbeitsspeicher (RAM) und einen Prozessor (CPU) umfasst, und wobei das Betriebssystem-Paket derart in dem nichtflüchtigen NVM-Speicher (NVM) des mobilen Endgeräts abgespeichert wird, dass das Secure Element (SE) das Betriebssystem aus dem nichtflüchtigen NVM-Speicher (NVM) des mobilen Endgeräts in den Arbeitsspeicher (RAM) des Secure Element (SE) laden kann und im Prozessor (CPU) des Secure Element (SE) zur Ausführung bringen kann.

3. Verfahren nach Anspruch 1 oder 2, wobei das Betriebssystem exklusiv im Secure Element (SE), dabei ggf im Prozessor (CPU) und internen Arbeitsspeicher (RAM) des Secure Element (SE), zur Ausführung gebracht werden kann.

4. Verfahren nach einem der Ansprüche 1 bis 3, wobei das geteilte Geheimnis zumindest zwei symmetrische Schlüssel umfasst, nämlich zumindest einen ersten und einen zweiten symmetrischen Schlüssel, wobei der Transportschlüssel durch den ersten symmetrischen Schlüssel gebildet oder von diesem abgeleitet ist, und wobei ein Authentisierungsschlüssel durch den zweiten symmetrischen Schlüssel gebildet oder von diesem abgeleitet ist, und wobei von dem Speicherimage (BLOB) weiter der Authentisierungsschüssel umfasst ist, wobei weiter:
Schritt (e) zusätzlich umfasst: im Hardware Security Module (HSM), Erzeugen eines Prüfcodes, insbesondere eines Message Authentication Code (MAC), über das verschlüsselte Betriebssystem;
Schritt (h) zusätzlich umfasst: im Secure Element (SE), Extrahieren und Verifizieren des Prüfcodes, insbesondere Message Authentication Code (MAC), aus dem Speicherimage (BLOB).

5. Verfahren nach einem der Ansprüche 1 bis 4, wobei von dem Betriebssystem-Paket weiter Personalisierungsdaten zur Personalisierung des Betriebssystems umfasst sind, wobei durch das Abspeichern des Betriebssystem-Pakets im nichtflüchtigen NVM-Speicher (NVM) ein mit den Personalisierungsdaten personalisiertes, im Secure Element (SE) ausführbares Betriebssystem bereitgestellt wird.

6. Verfahren nach einem der Ansprüche 1 bis 5, wobei von dem Betriebssystem-Paket weiter Profildaten für ein Profil oder mehrere Profile oder/und ein oder mehrere Applikationen umfasst sind, wobei durch das Abspeichern des Betriebssystem-Pakets im nichtflüchtigen NVM-Speicher (NVM) zusätzlich ein Profil oder mehrere Profile oder/und ein oder mehrere Applikationen, verschlüsselt mit dem NVM-Verschlüsselungsschlüssel, in dem nichtflüchtigen NVM-Speicher (NVM) abgespeichert werden, so dass das Profil oder die Profile oder/ und die Applikation oder Applikationen im Secure Element (SE) ausführbar ist bzw. sind, bevorzugt exklusiv im Secure Element (SE) ausführbar.

7. Verfahren nach einem der Ansprüche 1 bis 6,
umfassend den weiteren Schritt, der vor Schritt (e) erfolgt:
(d*) beim Hardware Security Module (HSM), Empfangen, vorzugsweise von einem Hersteller oder Verwalter des Betriebssystems oder des Secure Element (SE), eines Auftrags, das Secure Element (SE) zu personalisieren;
wobei Schritt (e) - dieser Schritt (e) umfassend insbesondere, in dem Hardware Security Module (HSM), Bereitstellen und Verschlüsseln des Betriebssystem-Pakets -, und die nachfolgenden Schritte (f) - (j) in Reaktion auf das Empfangen des Auftrags durchgeführt werden.

8. Verfahren nach einem der Ansprüche 1 bis 7, wobei von dem Betriebssystem-Paket weiter eine Signatur umfasst ist, das Verfahren weiter umfassend die Schritte:
anlässlich von Schritt (a), Bereitstellen eines Signatur-Verifizierungs-Schlüssels von dem Hardware Security Modul (HSM) an das Secure Element (SE); und
anlässlich von Schritt (e) oder (f), im Hardware Security Modul (HSM), Erzeugen der Signatur über das Betriebssystem - und im Fall von Anspruch 5 und 6 vorzugsweise zusätzlich über die Personalisierungsdaten oder/und über das Profil bzw. die Profile - mittels eines dem Signatur-Verifizierungs-Schlüssel entsprechenden Signatur-Erzeugungs-Schlüssels.

9. Verfahren nach einem der Ansprüche 1 bis 8, wobei das Secure Element SE) als integriertes Secure Element (iSE1, iSE2) gestaltet ist, welches als Secure Processor Einheit (SP) in einem Chip des Chipset des mobilen Endgeräts vorgesehen ist, wobei das Chipset zumindest die Secure Processor Einheit (SP), einen Application Processor (APP) und einen Baseband Processor (BB) umfasst, und wobei beim Festeinbau des Secure Element (SE) in das mobile Endgerät das Chipset in das mobile Endgerät galvanisch verbindend eingebaut wird.

10. Verfahren nach einem der Ansprüche 1 bis 8, wobei das Secure Element (SE) als embedded Secure Element (eSE) gestaltet ist, das in einem galvanisch verbindend einbaubaren, insbesondere einlötbaren, Chipmodul vorgesehen wird, und wobei beim Festeinbau des Secure Element (SE) in das mobile Endgerät das Chipmodul in das mobile Endgerät galvanisch verbindend eingebaut wird.

11. Verfahren zur Personalisierung eines oder mehrerer aus einer Mehrzahl von Secure Elements (SE) mittels einmaliger oder mehrmaliger Anwendung des Verfahrens nach einem der Ansprüche 1 bis 10, wobei jedem Secure Element (SE) ein eindeutiger Chip-Identifikator (UID) zugeordnet ist, umfassend den zusätzlichen vor Schritt (e) ausgeführten Schritt:
(d**) beim Hardware Security Module (HSM), Empfangen eines oder mehrerer Chip-Identifikator (UID); und
Auswählen eines oder mehrerer zu personalisierenden/ r Secure Element (SE) bzw. Elements (SE) anhand des Chip-Identifikators (UID).

12. Verfahren nach Anspruch 11, umfassend den weiteren Schritt, der vor Schritt (e) erfolgt:
(d*) beim Hardware Security Module (HSM), Empfangen, vorzugsweise von einem Hersteller oder Verwalter des Betriebssystems oder des Secure Element (SE), eines Auftrags, das Secure Element (SE) zu personalisieren; wobei Schritt (e) - dieser Schritt (e) umfassend insbesondere, in dem Hardware Security Module (HSM), Bereitstellen und Verschlüsseln des Betriebssystem-Pakets -, und die nachfolgenden Schritte (f) - (j) in Reaktion auf das Empfangen des Auftrags durchgeführt werden.

13. Verfahren nach Anspruch 12, wobei als Auftrag ein Auftrag zur Personalisierung einer Liste von ein oder mehreren Secure Elements (SE) vorgesehen ist, und wobei in dem Auftrag zu jedem Secure Element (SE) der Liste ein Chip-Identifikator (UID) des Secure Element (SE) angegeben ist.

14. Verfahren nach einem der Ansprüche 1 bis 13, wobei das Betriebssystem aufgeteilt in mehrere Teile in mehreren Übertragungsvorgängen von dem Hardware Security Module (HSM) an das Secure Element (SE) übertragen wird, und wobei das Betriebssystem-Paket einen Teil von der Gesamtzahl von Teilen des Betriebssystems umfasst, und wobei, um das gesamte Betriebssystem von dem Hardware Security Module (HSM) an das Secure Element (SE) zu übertragen, das Verfahren nach einem der Ansprüche 1 bis 13 mehrmals nacheinander durchgeführt wird; oder/und wobei das Betriebssystem und die Personalisierungsdaten und die Profile aufgeteilt in mehrere Teile in mehreren Übertragungsvorgängen von dem Hardware Security Module (HSM) an das Secure Element (SE) übertragen wird, und wobei die Personalisierungsdaten oder Teile davon oder / und das Profil oder die Profile oder manche davon, in ein oder mehreren vom Betriebssystem-Paket oder den Betriebssystem-Paketen des Betriebssystems gesonderten Betriebssystem-Paketen gemäß dem Verfahren von dem Hardware Security Module (HSM) an das Secure Element (SE) übertragen werden.

15. Verfahren nach einem der Ansprüche 1 bis 14, wobei Schritt (a) zum Bereitstellen des privaten und des öffentlichen SE-Schlüssels eine der beiden Optionen (a1) oder (a2) umfasst:
(a1) Im Secure Element (SE), Erzeugen eines asymmetrischen SE-Schlüsselpaars umfassend den privaten SE-Schlüssel und den öffentlichen SE-Schlüssel; und Bereitstellen des öffentlichen SE-Schlüssels des asymmetrischen SE-Schlüsselpaars in einem außerhalb des Secure Element (SE) angeordneten Hardware Security Module (HSM); ODER
(a2) In einem außerhalb des Secure Element (SE) angeordneten Hardware Security Module (HSM), Erzeugen eines asymmetrischen SE-Schlüsselpaars umfassend den privaten SE-Schlüssel und den öffentlichen SE-Schlüssel; und Bereitstellen des privaten SE-Schlüssels des asymmetrischen SE-Schlüsselpaars in dem Secure Element (SE).

## Claims

1. Method for personalizing a secure element (SE) that is fixedly installed in a mobile terminal, the personalization comprising equipping the secure element (SE) with an operating system able to be executed in the secure element (SE), the method comprising the following steps:
(a) providing the secure element (SE) and, before the secure element (SE) is fixedly installed in the mobile terminal, providing a private SE key of an asymmetric SE key pair in the secure element, and providing the public SE key of the same asymmetric SE key pair in a hardware security module (HSM) arranged outside the secure element (SE) ;
(b) after providing the private SE key to the secure element (SE) and the public SE key to the hardware security module (HSM), providing the secure element (SE) to a manufacturer of the mobile terminal and fixedly installing the secure element (SE) in a mobile terminal;
(c) in the hardware security module (HSM), generating or providing an asymmetric HSM key pair comprising a public HSM key and a private HSM key;
(d) in the hardware security module (HSM), based on the private HSM key and the public SE key, deriving a secret shared with the secure element, which secret is in the form of at least one symmetric key;
(e) in the hardware security module (HSM), providing an operating system packet including at least one operating system - or at least part of an operating system - and encrypting at least the operating system packet using a transport key that is formed by the shared secret or part thereof, or that is derived from the shared secret, in order to generate an encrypted operating system packet;
(f) in the hardware security module (HSM), generating a memory image (BLOB) suitable and configured for programming the secure element (SE), the memory image including at least the encrypted operating system packet and the public HSM key;
(g) operating a data connection between the hardware security module (HSM) and the secure element (SE) and transmitting the memory image (BLOB) from the hardware security module (HSM) to the secure element (SE) fixedly installed in the mobile terminal;
(h) in the secure element (SE), extracting the public HSM key from the memory image (BLOB) and, based on the private SE key and the public HSM key, deriving the shared secret and the transport key and decrypting the encrypted operating system packet using the transport key;
(i) in the secure element (SE), providing, generating or deriving a symmetric NVM encryption key individual to the secure element (SE) and different from the transport key, and encrypting the decrypted operating system packet using the NVM encryption key;
(j) using the secure element (SE) to store the operating system packet that is decrypted and encrypted again with the individual symmetric NVM encryption key in an NVM memory of the mobile terminal (NVM) that is arranged outside the secure element (SE), wherein, as a result of the operating system packet being stored in the NVM memory (NVM), the secure element (SE) is provided with an operating system able to be executed in the secure element (SE).

2. Method according to Claim 1,
(k) wherein the secure element (SE) comprises a main memory (RAM) and a processor (CPU), and wherein the operating system packet is stored in the non-volatile NVM memory (NVM) of the mobile terminal such that the secure element (SE) is able to load the operating system from the non-volatile NVM memory (NVM) of the mobile terminal into the main memory (RAM) of the secure element (SE) and execute it in the processor (CPU) of the secure element (SE) .

3. Method according to Claim 1 or 2, wherein the operating system is able to be executed exclusively in the secure element (SE), and in the process possibly in the processor (CPU) and internal main memory (RAM) of the secure element (SE).

4. Method according to one of Claims 1 to 3, wherein the shared secret comprises at least two symmetric keys, namely at least a first and a second symmetric key, wherein the transport key is formed by the first symmetric key or derived therefrom, and wherein an authentication key is formed by the second symmetric key or derived therefrom, and wherein the memory image (BLOB) furthermore contains the authentication key, wherein, furthermore:
step (e) additionally comprises: in the hardware security module (HSM), generating a check code, in particular a message authentication code (MAC), using the encrypted operating system;
step (h) additionally comprises: in the secure element (SE), extracting and verifying the check code, in particular message authentication code (MAC), from the memory image (BLOB).

5. Method according to one of Claims 1 to 4, wherein the operating system packet furthermore contains personalization data for personalizing the operating system, wherein, as a result of the operating system packet being stored in the non-volatile NVM memory (NVM), an operating system personalized with the personalization data and able to be executed in the secure element (SE) is provided.

6. Method according to one of Claims 1 to 5, wherein the operating system packet furthermore contains profile data for one profile or multiple profiles or/and one or more applications, wherein, as a result of the operating system packet being stored in the non-volatile NVM memory (NVM), one profile or multiple profiles or/and one or more applications are additionally stored in the non-volatile NVM memory (NVM) encrypted with the NVM encryption key, such that the profile or the profiles or/and the application or applications is/are able to be executed in the secure element (SE), preferably able to be executed exclusively in the secure element (SE).

7. Method according to one of Claims 1 to 6, comprising the following further step that takes place before step (e) :
(d*) at the hardware security module (HSM), receiving, preferably from a manufacturer or manager of the operating system or of the secure element (SE), an order to personalize the secure element (SE); wherein step (e) - this step (e) comprising in particular, in the hardware security module (HSM), providing and encrypting the operating system packet - and following steps (f) - (j) are performed in response to the receipt of the order.

8. Method according to one of Claims 1 to 7, wherein the operating system packet furthermore contains a signature, the method furthermore comprising the following steps:
upon step (a), providing a signature verification key from the hardware security module (HSM) to the secure element (SE); and
upon step (e) or (f), in the hardware security module (HSM), generating the signature using the operating system - and in the case of Claim 5 or 6 preferably additionally using the personalization data or/and using the profile or the profiles - by way of a signature generation key corresponding to the signature verification key.

9. Method according to one of Claims 1 to 8, wherein the secure element (SE) is designed as an integrated secure element (iSE1, iSE2) that is provided as a secure processor unit (SP) in a chip of the chipset of the mobile terminal, wherein the chipset comprises at least the secure processor unit (SP), an application processor (APP) and a baseband processor (BB), and wherein, when the secure element (SE) is fixedly installed in the mobile terminal, the chipset is installed in the mobile terminal so as to create a galvanic connection.

10. Method according to one of Claims 1 to 8, wherein the secure element (SE) is designed as an embedded secure element (eSE) that is provided in a chip module able to be installed so as to create a galvanic connection, in particular able to be soldered in, and wherein, when the secure element (SE) is fixedly installed in the mobile terminal, the chip module is installed in the mobile terminal so as to create a galvanic connection.

11. Method for personalizing one or more of a plurality of secure elements (SE) by applying the method according to one of Claims 1 to 10 one or more times, wherein each secure element (SE) is assigned a unique chip identifier (UID), comprising the additional step carried out before step (e):
(d**) in the hardware security module (HSM), receiving one or more chip identifiers (UID); and selecting one or more secure elements (SE) to be personalized based on the chip identifier (UID).

12. Method according to Claim 11, comprising the following further step that takes place before step (e): (d*) at the hardware security module (HSM), receiving, preferably from a manufacturer or manager of the operating system or of the secure element (SE), an order to personalize the secure element (SE); wherein step (e) - this step (e) comprising in particular, in the hardware security module (HSM), providing and encrypting the operating system packet - and following steps (f) - (j) are performed in response to the receipt of the order.

13. Method according to Claim 12, wherein provision is made, as the order, for an order to personalize a list of one or more secure elements (SE), and wherein the order indicates, for each secure element (SE) in the list, a chip identifier (UID) of the secure element (SE).

14. Method according to one of Claims 1 to 13, wherein the operating system is transmitted from the hardware security module (HSM) to the secure element (SE) in multiple transmission processes in a manner split into multiple parts, and wherein the operating system packet comprises some of the total number of parts of the operating system, and wherein, in order to transmit the entire operating system from the hardware security module (HSM) to the secure element (SE), the method according to one of Claims 1 to 13 is performed multiple times in succession; or/and wherein the operating system and the personalization data and the profiles are transmitted from the hardware security module (HSM) to the secure element (SE) in multiple transmission processes in a manner split into multiple parts, and wherein the personalization data or parts thereof or/and the profile or the profiles or some thereof are transmitted from the hardware security module (HSM) to the secure element (SE) in accordance with the method in one or more operating system packets separate from the operating system packet or the operating system packets of the operating system.

15. Method according to one of Claims 1 to 14, wherein step (a) of providing the private and public SE key comprises one or both of options (a1) or (a2):
(a1) In the secure element (SE), generating an asymmetric SE key pair comprising the private SE key and the public SE key; and providing the public SE key of the asymmetric SE key pair in a hardware security module (HSM) arranged outside the secure element (SE); OR
(a2) In a hardware security module (HSM) arranged outside the secure element (SE), generating an asymmetric SE key pair comprising the private SE key and the public SE key; and providing the private SE key of the asymmetric SE key pair in the secure element (SE).

## Revendications

1. Procédé permettant de personnaliser un élément sécurisé (SE) qui est installé à demeure dans un terminal mobile, la personnalisation comprenant le fait d'équiper l'élément sécurisé (SE) d'un système d'exploitation exécutable dans l'élément sécurisé (SE), le procédé comprenant les étapes consistant à :
(a) fournir l'élément sécurisé (SE), et avant l'installation à demeure de l'élément sécurisé (SE) dans le terminal mobile, fournir une clé SE privée d'une paire de clés SE asymétrique dans l'élément sécurisé, et fournir la clé SE publique de la même paire de clés SE asymétrique dans un module matériel de sécurité (HSM) disposé à l'extérieur de l'élément sécurisé (SE) ;
(b) après la fourniture de la clé SE privée à l'élément sécurisé (SE) et de la clé SE publique au module matériel de sécurité (HSM), fournir l'élément sécurisé (SE) à un fabricant du terminal mobile, et installer à demeure l'élément sécurisé (SE) dans un terminal mobile ;
(c) dans le module matériel de sécurité (HSM), générer ou fournir une paire de clés HSM asymétrique qui comprend une clé HSM publique et une clé HSM privée ;
(d) dans le module matériel de sécurité (HSM), en partant de la clé HSM privée et de la clé SE publique, dériver un secret partagé avec l'élément de sécurité qui est configuré comme au moins une clé asymétrique ;
e) dans le module matériel de sécurité (HSM), fournir un pack de système d'exploitation qui comprend au moins un système d'exploitation - ou du moins une partie d'un système d'exploitation - et crypter au moins le pack de système d'exploitation avec une clé de transport qui est formée par le secret partagé ou une partie de celui-ci, ou qui est dérivée du secret partagé, afin de générer un pack de système d'exploitation crypté ;
(f) dans le module matériel de sécurité (HSM), générer une image mémoire (BLOB) adaptée et conçue pour programmer l'élément sécurisé (SE) et qui comprend au moins le pack de système d'exploitation et la clé HSM publique ;
(g) faire fonctionner une liaison de données entre le module matériel de sécurité (HSM) et l'élément sécurisé (SE), et transmettre l'image mémoire (BLOB) du module matériel de sécurité (HSM) à l'élément sécurisé (SE) installé à demeure dans le terminal mobile ;
(h) dans l'élément sécurisé (SE), extraire la clé HSM publique de l'image mémoire (BLOB), et en partant de la clé SE privée et de la clé HSM publique, dériver le secret partagé et la clé de transport, et décrypter le pack de système d'exploitation crypté au moyen de la clé de transport ;
(i) dans l'élément sécurisé (SE), fournir, générer ou dériver une clé de cryptage NVM symétrique, individualisée pour l'élément sécurisé (SE) et qui est différente de la clé de transport, et crypter le pack de système d'exploitation décrypté avec la clé de cryptage NVM ;
(j) par l'élément sécurisé (SE), enregistrer le pack de système d'exploitation décrypté et à nouveau crypté avec la clé de cryptage NVM symétrique individualisée dans une mémoire NVM, disposée à l'extérieur de l'élément sécurisé (SE), du terminal mobile (NVM), dans lequel l'enregistrement du pack de système d'exploitation dans la mémoire NVM (NVM) permet d'équiper l'élément sécurisé (SE) d'un système d'exploitation exécutable dans l'élément sécurisé (SE).

2. Procédé selon la revendication 1,
(k) dans lequel l'élément sécurisé (SE) comprend une mémoire vive (RAM) et un processeur (CPU), et dans lequel le pack de système d'exploitation est enregistré dans la mémoire NVM non volatile (NVM) du terminal mobile de telle sorte que l'élément sécurisé (SE) peut charger le système d'exploitation à partir de la mémoire NVM non volatile (NVM) du terminal mobile dans la mémoire vive (RAM) de l'élément sécurisé (SE) et le faire exécuter dans le processeur (CPU) de l'élément sécurisé (SE).

3. Procédé selon la revendication 1 ou 2, dans lequel le système d'exploitation peut être exécuté exclusivement dans l'élément sécurisé (SE), et le cas échéant dans le processeur (CPU) et la mémoire vive interne (RAM) de l'élément sécurisé (SE).

4. Procédé selon l'une quelconque des revendications 1 à 3, dans lequel le secret partagé comprend au moins deux clés symétriques, notamment au moins une première et une deuxième clé symétrique, dans lequel la clé de transport est formée par la première clé symétrique ou dérivée de celle-ci, et dans lequel une clé d'authentification est formée par la deuxième clé symétrique ou dérivée de celle-ci, et dans lequel l'image mémoire (BLOB) comprend en outre la clé d'authentification, dans lequel en outre :
l'étape (e) comprend de plus : dans le module matériel de sécurité (HSM), générer un code de contrôle, en particulier un code d'authentification de message (MAC) par l'intermédiaire du système d'exploitation crypté ;
l'étape (h) comprend en plus : dans l'élément sécurisé (SE), extraire de l'image mémoire (BLOB) et vérifier le code de contrôle, en particulier le code d'authentification de message (MAC).

5. Procédé selon l'une quelconque des revendications 1 à 4, dans lequel le pack de système d'exploitation comprend en outre des données de personnalisation pour personnaliser le système d'exploitation, dans lequel l'enregistrement du pack de système d'exploitation dans la mémoire NVM non volatile (NVM) fournit un système d'exploitation, personnalisé par les données de personnalisation et exécutable dans l'élément sécurisé (SE) .

6. Procédé selon l'une quelconque des revendications 1 à 5, dans lequel le pack de système d'exploitation comprend en outre des données de profil pour un profil ou pour plusieurs profils ou/et une ou plusieurs applications, dans lequel l'enregistrement du pack de système d'exploitation dans la mémoire NVM non volatile (NVM) enregistre de plus un profil ou plusieurs profils ou/et une ou plusieurs applications, cryptés avec la clé de cryptage NVM, dans la mémoire NVM non volatile (NVM) de sorte que le profil ou les profils ou/et l'application ou les applications sont exécutables dans l'élément sécurisé (SE), de préférence exécutables exclusivement dans l'élément sécurisé (SE).

7. Procédé selon l'une quelconque des revendications 1 à 6, comprenant l'étape supplémentaire qui est effectuée avant l'étape (e) :
(d*) au niveau du module matériel de sécurité (HSM), recevoir, de préférence d'un fabricant ou gestionnaire du système d'exploitation ou de l'élément sécurisé (SE), un ordre de personnaliser l'élément sécurisé (SE) ;
dans lequel l'étape (e) - ladite étape (e) comprenant en particulier dans le module matériel de sécurité (HSM) la fourniture et le cryptage du pack de système d'exploitation - et les étapes suivantes (f) à (j) sont effectuées en réponse à la réception de l'ordre.

8. Procédé selon l'une quelconque des revendications 1 à 7, dans lequel le pack de système d'exploitation comprend en outre une signature, le procédé comprenant en outre les étapes consistant à :
à l'occasion de l'étape (a), fournir une clé de vérification de signature du module matériel de sécurité (HSM) à l'élément sécurisé (SE) ; et
à l'occasion de l'étape (e) ou (f), dans le module matériel de sécurité (HSM), générer la signature par l'intermédiaire du système d'exploitation, et dans le cas des revendications 5 et 6, de préférence en plus par l'intermédiaire des données de personnalisation ou/et par l'intermédiaire du profil ou des profils - au moyen d'une clé de génération de signature correspondant à la clé de vérification de signature.

9. Procédé selon l'une quelconque des revendications 1 à 8, dans lequel l'élément sécurisé (SE) est configuré en tant qu'élément sécurisé intégré (iSE1, iSE2) qui est prévu en tant qu'unité de processeur sécurisé (SP) dans une puce du chipset du terminal mobile, dans lequel le chipset comprend au moins l'unité de processeur sécurisé (SP), un processeur d'application (APP) et un processeur de bande de base (BB), et dans lequel, lors de l'installation à demeure de l'élément sécurisé (SE) dans le terminal mobile, le chipset est installé par liaison galvanique dans le terminal mobile.

10. Procédé selon l'une quelconque des revendications 1 à 8, dans lequel l'élément sécurisé (SE) est configuré en tant qu'élément sécurisé incorporé (eSE) qui est prévu dans un module de puce pouvant être installé par liaison galvanique, en particulier pouvant être brasé, et dans lequel lors de l'installation à demeure de l'élément sécurisé (SE) dans le terminal mobile, le module de puce est installé par liaison galvanique dans le terminal mobile.

11. Procédé permettant de personnaliser un ou plusieurs d'une pluralité d'éléments sécurisés (SE) au moyen d'une utilisation unique ou répétée du procédé selon l'une quelconque des revendications 1 à 10, dans lequel un identificateur de puce unique (UID) est attribué à chaque élément sécurisé (SE), comprenant l'étape supplémentaire, effectuée avant l'étape (e), consistant à :
(d**) au niveau du module matériel de sécurité (HSM), recevoir un ou plusieurs identificateurs de puce (UID) ; et
sélectionner un élément sécurisé (SE) ou plusieurs éléments sécurisés (SE) à personnaliser à l'aide de l'identificateur de puce (UID).

12. Procédé selon la revendication 11, comprenant l'étape supplémentaire, qui est effectuée avant l'étape (e), consistant à :
(d*) au niveau du module matériel de sécurité (HSM), recevoir, de préférence d'un fabricant ou gestionnaire du système d'exploitation ou de l'élément sécurisé (SE), un ordre de personnaliser l'élément sécurisé (SE) ;
dans lequel l'étape (e) - ladite étape (e) comprenant en particulier dans le module matériel de sécurité (HSM) la fourniture et le cryptage du pack de système d'exploitation - et les étapes suivantes (f) à (j) sont effectuées en réponse à la réception de l'ordre.

13. Procédé selon la revendication 12, dans lequel en tant qu'ordre, un ordre de personnaliser une liste d'un ou de plusieurs éléments sécurisés (SE), et dans lequel dans l'ordre, un identificateur de puce (UID) de l'élément sécurisé (SE) est indiqué pour chaque élément sécurisé (SE) de la liste.

14. Procédé selon l'une quelconque des revendications 1 à 13, dans lequel le système d'exploitation est transmis en étant répartis sur plusieurs parties, au cours de plusieurs opérations de transmission, du module matériel de sécurité (HSM) à l'élément sécurisé (SE), et dans lequel le pack de système d'exploitation comprend une partie du nombre total de parties du système d'exploitation, et dans lequel, pour transmettre la totalité du système d'exploitation du module matériel de sécurité (HSM) à l'élément sécurisé (SE), le procédé selon l'une quelconque des revendications 1 à 13 est effectué successivement à plusieurs reprises ; ou/et dans lequel le système d'exploitation et les données de personnalisation et les profils sont transmis en étant répartis sur plusieurs parties, au cours de plusieurs opérations de transmission, du module matériel de sécurité (HSM) à l'élément sécurisé (SE), et dans lequel les données de personnalisation ou des partie de celles-ci ou/et le profil ou les profils, ou certains de ceux-ci, sont transmis du module matériel de sécurité (HSM) à l'élément sécurisé (SE) dans un ou plusieurs packs de système d'exploitation selon le procédé, séparés du pack de système d'exploitation ou des packs de système d'exploitation du système d'exploitation.

15. Procédé selon l'une quelconque des revendications 1 à 14, dans lequel l'étape (a) de fourniture des clés SE privée et publique comprend l'une des deux options (a1) ou (a2) consistant à :
(a1) dans l'élément sécurisé (SE), générer une paire de clés SE asymétrique, comprenant la clé SE privée et la clé SE publique ; et fournir la clé SE publique de la paire de clés SE asymétrique dans un module matériel de sécurité (HSM) disposé à l'extérieur de l'élément sécurisé (SE) ; OU
(a2) dans un module matériel de sécurité (HSM) disposé à l'extérieur de l'élément sécurisé (SE), générer une paire de clés SE asymétrique comprenant la clé SE privée et la clé SE publique ; et fournir la clé SE privée de la paire de clés SE asymétrique dans l'élément sécurisé (SE).
